# EUROPEAN PATENT SPECIFICATION

(11) **EP 4 274 029 B1**
(45) Date of publication and mention of the grant of the patent: **11.11.2026**
(21) Application number: 21914207.2
(22) Date of filing: 24.12.2021
(51) Int. Cl.: H01M 50/296, H01M 50/50

(54) **MODULE OUTPUT ELECTRODE STRUCTURE**
AUSGANGSELEKTRODENSTRUKTUR FÜR EIN MODUL
STRUCTURE D'ÉLECTRODE DE SORTIE DE MODULE

(30) Priority: 30.12.2020 CN 202011610441
(43) Date of publication of application: 08.11.2023
(73) Proprietor: SVOLT ENERGY TECHNOLOGY CO., LTD, Changzhou, Jiangsu 213200 (CN)
(72) Inventor: SHAN, Xiaolin, hangzhou, Jiangsu 213200 (CN); XU, Dong, hangzhou, Jiangsu 213200 (CN); TANG, Lijuan, hangzhou, Jiangsu 213200 (CN); ZHANG, Jiajia, hangzhou, Jiangsu 213200 (CN)
(74) Representative: Michalski Hüttermann & Partner mbB
(86) International application number: PCT/CN2021/141284
(87) International publication number: WO 2022/143470

(56) References cited:
- EP-A1- 3 754 792
- CN-A- 112 768 960
- CN-U- 206 353 640
- CN-U- 210 837 911
- CN-U- 212 136 573
- CN-U- 214 013 304
- DE-A1- 102019 134 469
- US-A1- 2018 375 227

## Description

### FIELD

The present disclosure relates to the field of power battery technologies, and more particularly, to a module output electrode structure.

### BACKGROUND

With the increasingly serious environmental and energy problems, an increased emphasis has been placed on development and production of electric vehicles. Since a power battery is a key component of an electric vehicle, safety thereof is of great importance. Usually, in a power battery pack, a plurality of modules is connected in series to increase battery power. A voltage of the power battery pack having the modules that are connected in series normally ranges from 300 V to 500 V, and some even reach a high voltage of 800 V.

A conventional module output electrode structure cannot meet high-voltage safety protection requirements for the power battery pack in production, transportation, assembly, and after-sales maintenance. In addition, the use of the conventional module output electrode structure is limited due to high space occupancy of the power battery pack in a crush direction. Therefore, it is imperative to solve the high-voltage safety protection problem of a power battery system and the safety problem of the power battery pack in the event of high-voltage crush. DE102019134469A1 discloses a battery connection module including a plurality of bus members, two bridging bus members, a flexible circuit board, an electrode unit and a power connection strip, which can omit solder joints or connection points constructed for connecting two battery packs in series in the prior art and allow the power connector and the power connector to be docked quickly and in position. DE 10 2019 134469 A1 discloses the preamble of claim 1. US2018/375227A1 discloses a module connector, which includes a first connector including a first conductor attached to the first connector at a conductor point of the first connector and a second connector capable of being electrically connected with the first connector and including a second conductor attached to the second connector at a conductor point of the second connector.

### SUMMARY

In view of the above problems, the present disclosure aims to provide a module output electrode structure, which can enhance protection performance of an output electrode, and reducing a size of the output electrode, thereby improving safety of a module against high-voltage crush.

To achieve the above objectives, technical solutions of the present disclosure are implemented as follows.

A module output electrode structure includes an output electrode base, and an output electrode inserter fixedly connected to the output electrode base. A base busbar is provided in the output electrode base. An inserter busbar in an electrical connection with the base busbar is provided in the output electrode inserter. One end of the base busbar is formed as an adapter end protruding from the output electrode base. One end of the inserter busbar extends out of the output electrode inserter. The adapter end and the output electrode inserter are offset at two sides of the output electrode base, respectively. The output electrode base includes a base body that is insulated, and a base insertion portion formed on the base body. The base busbar is located in the base body. The adapter end protrudes from the base body. Another end of the base busbar is located at the base insertion portion. The adapter end and the base insertion portion are offset at the two sides of the base body, respectively. A fastening fitting member is provided at the base insertion portion. The output electrode inserter includes a housing that is insulated, and an inserter insertion portion formed on the housing. The inserter busbar is located in the housing, and has one end extending out of the housing and another end located at the inserter insertion portion. A fastener is provided at the inserter insertion portion. The inserter insertion portion is inserted into and connected to the base insertion portion to form an electrical connection between the inserter busbar and the base busbar. The output electrode inserter is fixedly connected to the output electrode base by connecting the fastener to the fastening fitting member. A mounting portion is provided on the base body, and the mounting portion is configured to enable the module output electrode structure to be mounted on a module end plate. A mounting groove is defined on the module end plate, and the base body is mounted in the mounting groove. The mounting portion incudes a snap feature formed on the base body. A snap fitting feature corresponding to the snap feature is provided on the module end plate. A protective protrusion corresponding to the fastening fitting member is provided on a bottom of the base body. An avoidance groove configured to avoid the protective protrusion is defined at a bottom of the mounting groove.

The base insertion portion is an insertion hole defined on the base body. The inserter insertion portion is a plug formed on the housing. A through hole penetrating the housing and the plug is defined on the housing.

A positioning portion is provided between the plug and the insertion hole, and the positioning portion is configured to restrict a relative rotation between the plug and the insertion hole. Snap portions are provided between the housing and the base body, and the snap portions are snapped with and connected to each other by inserting the plug into the insertion hole.

The fastening fitting member is a nut fixedly connected to the base busbar and fixed in the insertion hole. The fastener is a bolt located in the through hole and penetrating the inserter busbar. The electrical connection between the inserter busbar and the base busbar is formed through a connection between the bolt and the nut.

An electrical connection sleeve fixedly connected to the base busbar is sleeved over the nut. An electrical connection ring arranged around the bolt is fixedly connected to the inserter busbar. The electrical connection ring is sleeved over the electrical connection sleeve as the bolt is connected to the nut.

An insulation sleeve is fixedly connected to a top end of the nut. An insulation cover is fixedly connected to a head of the bolt. A circular limiting platform is formed on the insulation cover and configured to restrict the bolt from being unscrewed out of the through hole.

The housing comprises an upper housing, and a lower housing snapped with the upper housing and having the inserter. The inserter busbar is received between the upper housing and the lower housing. The through hole penetrates the upper housing and the lower housing. A containment ring arranged around the through hole is provided on a top of the upper housing. An end, out of which the inserter busbar extends, of the housing is formed into a flared opening defined by the upper housing and the lower housing.

The base busbar has a transverse portion, and a vertical portion located at one end of the transverse portion and arranged on a side of the transverse portion. A notch is defined on the side of the transverse portion adjacent to the vertical portion. The base has a same shape as the base busbar.

Compared with the related art, the present disclosure can provide the following advantages.

With the module output electrode structure described in the present disclosure, the adapter end of the base busbar and the output electrode inserter are offset at the two sides of the output electrode base, respectively. Therefore, a staggered arrangement between the adapter end of the base busbar and the output electrode inserter can reduce an overall size of the module output electrode structure, thereby improving safety of an output electrode in event of high-voltage crush.

In addition, in the present disclosure, the fastener is connected to the fastening fitting member, which can not only allow the inserter busbar and the base busbar to have satisfying electrical connection performance, but also ensure the output electrode inserter to be reliably connected to the output electrode base, thereby improving use safety of the module output electrode structure. By arranging the insulation cover on the top end of the fastener and arranging the insulation sleeve on the fastening fitting member, a conductive body can be effectively prevented from being touched by a hand to avoid an occurrence of an electric shock, thereby improving protection performance. By arranging the notch on the base busbar, bending stress of the base busbar can be relieved while ensuring a mounting area of the base busbar.

In addition, in the present disclosure, by providing the snap feature on the base body and the snap fitting feature on the module end plate, the module output electrode structure can be easily and conveniently mounted on the module end plate with good connection performance. The protective protrusion is provided to insulate and wrap the fastening fitting member to prevent the fastening fitting member from being exposed. Also, the avoidance groove defined on the bottom of the mounting groove can avoid assembly interference due to an arrangement of the protective protrusion to facilitate mounting of the base on the module end plate.

### BRIEF DESCRIPTION OF THE DRAWINGS

The accompanying drawings which constitute a part of the present disclosure are used to provide a further understanding of the present disclosure. Illustrative embodiments of the present disclosure and description thereof are used to explain the present disclosure, and do not constitute an improper limitation of the present disclosure. In the accompanying drawings:
FIG. 1 is a schematic structural view of a module output electrode structure according to an embodiment of the present disclosure;
FIG. 2 is an explosion view of an output electrode base according to an embodiment of the present disclosure;
FIG. 3 is an explosion view of an output electrode inserter according to an embodiment of the present disclosure;
FIG. 4 is a schematic structural view of a module end plate according to an embodiment of the present disclosure; and
FIG. 5 is a schematic structural view of the module output electrode structure in a use state according to an embodiment of the present disclosure.

Reference numerals of the accompanying drawings:
1. output electrode base; 101. base body; 102. nut; 103. insulation sleeve; 104. electrical connection sleeve; 105. notch; 106. snap protrusion; 107. positioning groove; 108. snap joint; 109. protective protrusion;
2. output electrode inserter; 201. upper housing; 2011. containment ring; 2012. snap hole; 202. lower housing; 2021. positioning block; 2022. snap block; 2023. snap hole; 203. bolt; 2031. insulation cover; 2032. circular limiting platform;
10. insertion hole; 20. plug; 30. through hole; 40. module end plate; 401. snap groove; 402. avoidance groove; 50. adapter end; 100. base busbar; 200. inserter busbar; 2001. electrical connection ring.

### DESCRIPTION OF EMBODIMENTS

It should be noted that embodiments of the present disclosure and features disclosed in the embodiments of the present disclosure can be combined with each other without conflicting.

In the description of the present disclosure, it should be noted that, the orientation or position relationship indicated by terms such as "over", "below", "in", "out", etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation to the present disclosure. In addition, the terms "first" and "second" are only used for descriptive purposes, and cannot be understood as indicating or implying relative importance.

In addition, in the present disclosure, unless otherwise clearly specified and limited, terms such as "installed", "connected with", "connected to", "connector" and the like should be understood in a broad sense. For example, it may be a fixed connection or a detachable connection or connection as one piece; a mechanical connection or an electrical connection; a direct connection or an indirect connection through an intermediate; or an internal communication of two components. For those of ordinary skill in the art, the specific meaning of the above-mentioned terms in the present disclosure can be understood according to specific circumstances.

The present disclosure will be described in detail below with reference to the accompanying drawings and the embodiments.

The embodiments relate to a module output electrode structure. In an overall design of the module output electrode structure, the module output electrode structure includes an output electrode, and an output electrode inserter fixedly connected to the output electrode base. A base busbar is provided in the output electrode base. An inserter busbar in an electrical connection with the base busbar is provided in the output electrode inserter. One end of the base busbar is formed as an adapter end protruding from the output electrode base. One end of the inserter busbar extends out of the output electrode inserter. The adapter end and the output electrode inserter are offset at two sides of the output electrode base, respectively.

Based on the overall design, in the module output electrode structure according to the embodiments, the adapter end of the base busbar and the output electrode inserter are offset at the two sides of the output electrode base, respectively. Therefore, this staggered arrangement between the adapter end of the base busbar and the output electrode inserter can reduce an overall size of the module output electrode structure, thereby improving safety of an output electrode in event of high-voltage crush.

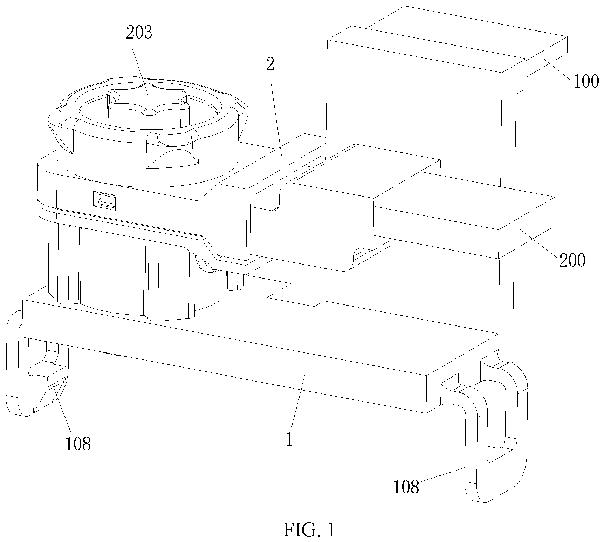

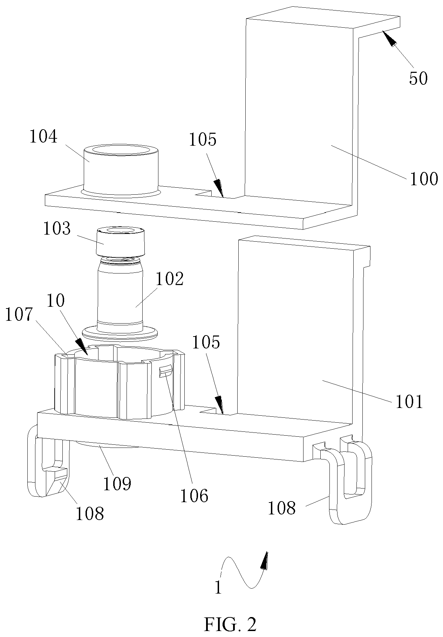

Based on the above design concept, an exemplary structure of the module output electrode structure according to an embodiment of the present disclosure is as illustrated in FIG. 1 and FIG. 2. In the exemplary structure, the output electrode base 1 includes a base body 101 that is insulated, and a base insertion portion formed on the base body 101. A base busbar 100 is located in the base body 101, and an adapter end 50 protrudes from the base body 101. In addition, the other end of the base busbar 100 is located at the base insertion portion. The adapter end 50 and the base insertion portion are offset at two sides of the base body 101, respectively. A fastening fitting member is disposed at the base insertion portion.

The output electrode inserter 2 includes a housing that is insulated, and an inserter insertion portion formed on the housing. An inserter busbar 200 is located within the housing, and has one end extending out of the housing and the other end located at the inserter insertion portion. A fastener is disposed at the inserter insertion portion. In addition, the inserter insertion portion is inserted into and connected to the base insertion portion to form an electrical connection between the inserter busbar 200 the base busbar 100. The output electrode inserter 2 is fixedly connected to the output electrode base 1 by connecting the fastener to the fastening fitting member.

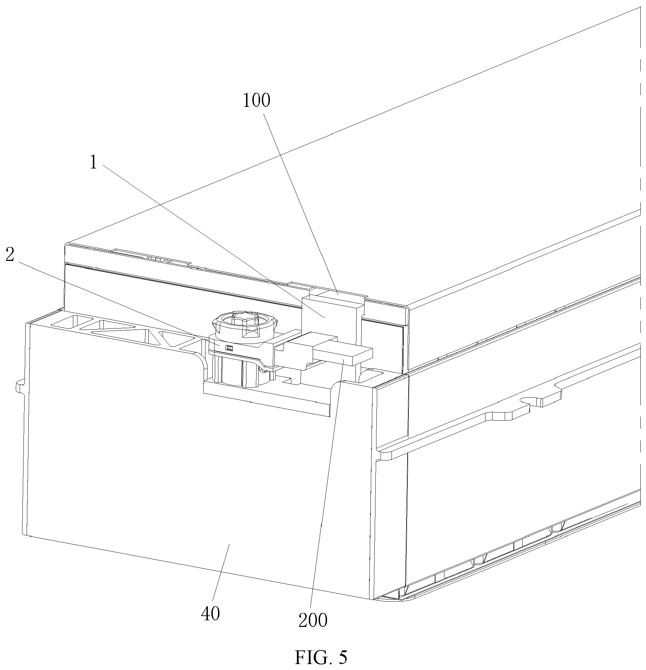

With continued reference to FIG. 1 and FIG. 2, the output electrode base 1 mainly includes the base body 101 that is insulated, the base busbar 100, and the base insertion portion. The base body 101 is of a substantially Z-shaped structure. The base busbar 100 is bent into a same Z-shaped structure as the base body 101, and is fixed in the base body 101 by means of an injection molding process. In addition, one end of the base busbar 100 is formed as the adapter end 50 protruding from the base body 101. As illustrated in FIG. 1 and with reference to FIG. 5, the adapter end 50 is configured to be engaged with and connected to a module output end. The other end of the base busbar 100 is located at the base insertion portion. The adapter end 50 and the base insertion portion are offset at the two sides of the base body 101, respectively. The fastening fitting member is disposed at the base insertion portion.

As illustrated in FIG. 2, the base insertion portion is an insertion hole 10 defined on the base body 101, and the fastening fitting member is a nut 102 fixedly connected to the base busbar 100 and fixed in the insertion hole 10. With continued reference to FIG. 2, a base insertion body of a hollow cylindrical shape is formed on the base body 101. A mounting cavity is formed within the base insertion body, and the above insertion hole 10 is defined by the mounting cavity. The above fastening fitting member, i.e., the nut 102, is disposed in the cavity inside the base insertion body and connected to the base busbar 100.

A structure of the base busbar 100 according to this embodiment of the present disclosure is still as illustrated in FIG. 2. The base busbar 100 has a transverse portion, and a vertical portion located at one end of the transverse portion and arranged on a side of the transverse portion. The nut 102 is connected to the transverse portion. One end of the vertical portion that is bent and extends outwardly is formed as the adapter end 50 as described above. In addition, a notch 105 is defined on the side of the transverse portion adjacent to the vertical portion to relieve bending stress of the base busbar 100. In addition, the base body 101 is formed into a same shape as the base busbar 100. That is, a notch 105 is also defined on the base body 101 to allow the base body 101 to match with the base busbar 100. Thus, it is possible to ensure a mounting area of the base busbar 100.

In order to improve performance of a connection between the base busbar 100 and the nut 102, the nut 102 according to this embodiment is a tailored nut 102. The nut 102 has a cylindrical screwed segment, and a connection collar connected to one end of the base busbar 100 and fixedly connected to the screwed segment. The connection collar is abutted against the base busbar 100 by passing the screwed segment of the nut 102 through a mounting hole defined on the base busbar 100, enabling the base busbar 100 to be connected to the nut 102.

In an embodiment, an electrical connection sleeve 104 fixedly connected on the base busbar 100 is sleeved over the screwed segment of the nut 102. An end surface of the electrical connection sleeve 104 abutted with the base busbar 100 has a flared protruding edge. In this way, an abutment area of the electrical connection sleeve 104 with the base busbar 100 can be increased, which can not only improve connection reliability, but also provide high current-carrying capacity. It should be noted that, the electrical connection sleeve 104 is preferably made of copper or aluminum. Of course, in addition to the copper or the aluminum, the electrical connection sleeve 104 may also be made of other conductive materials.

In addition, an insulation sleeve 103 is fixedly connected to a top end of the nut 102 to prevent a conductive member from being touched by a hand during an insertion operation. An outer diameter of the insulation sleeve 103 is greater than an inner diameter of the electrical connection sleeve 104. The insulation sleeve 103 has a portion protruding from the base insertion body. In this way, on the one hand, an electrical connection between the insulation sleeve 103 and the output electrode inserter 2 can be facilitated, and on the other hand, a position of the electrical connection sleeve 104 can be limited to a certain extent.

It should be noted that, the base busbar 100, the nut 102, the electrical connection sleeve 104, and the insulation sleeve 103 are together formed as a busbar assembly by connecting the base busbar 100 to the connection collar of the nut 102 by means of a rivet, then mounting the electrical connection sleeve 104 on the nut 102, and then fixedly connecting the insulation sleeve 103 to the top end of the nut 102 by means of adhering or injection molding. Finally, the busbar assembly is embedded into the base body 101 by injection molding or other similar processes. With such a structure, the base insertion portion is offset from the adapter end 50, which can reduce the output electrode in size, save mounting space, and improve safety in the event of high-voltage crush.

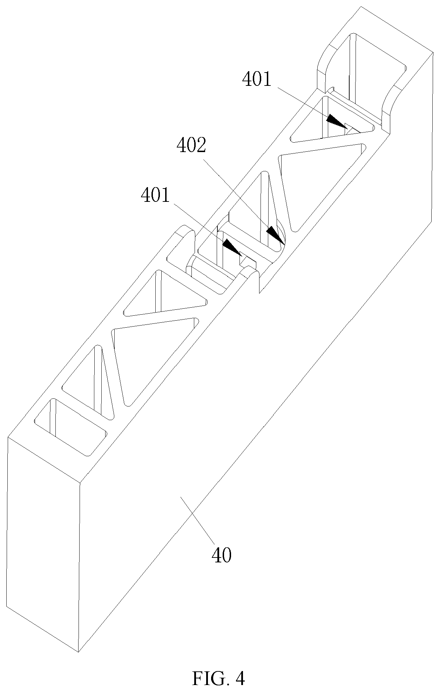

In order to facilitate mounting of the module output electrode structure on an external member such as a module end plate 40, in this embodiment, the base body 101 is provided with a mounting portion for enabling the module output electrode structure to be mounted on the module end plate 40. As illustrated in FIG. 2 and with reference to FIG. 4 and FIG. 5, a mounting groove is defined on the module end plate 40, and the base body 101 is mounted in the mounting groove. The mounting portion specifically includes a snap feature formed on the base body 101. Correspondingly, the module end plate 40 is provided with a snap fitting feature corresponding to the snap feature. The snap feature is snap joints 108 formed at two ends of the base body 101. A hollow hole is defined on each of the snap joints 108 to facilitate a deformation of the snap joint 108, enabling the snap joint 108 to be smoothly snapped into a snap groove 401 defined on the module end plate 40.

In addition, a protective protrusion 109 is provided on a bottom of the base body 101 and corresponds to the fastening fitting member, i.e., the nut 102, to provide insulative protection for the nut 102 and avoid an exposure of the conductive body. In order to prevent an assembly interference due to an arrangement of the protective protrusion 109, an avoidance groove 402 configured to avoid the protective protrusion 109 is defined at a bottom of the mounting groove. Also, an insertion end of the mounting groove defined on the module end plate 40 has a rounded edge to effectively prevent an insulation film from being scratched by a sharp edge.

In this embodiment, by allowing the snap joints 108 to be snapped into the snap groove 401, reliability of a connection between the base body 101 and the module end plate 40 can be ensured. It should be noted that, according to the embodiment, the mounting portion may also be an insertion post disposed on the base body 101, and the insertion post has a polygonal cross section. The base body 101 can be mounted on the module end plate 40 by means of a mounting cavity defined on and matching with the module end plate 40. Of course, other structures in the related art may also be applied to the mounting portion.

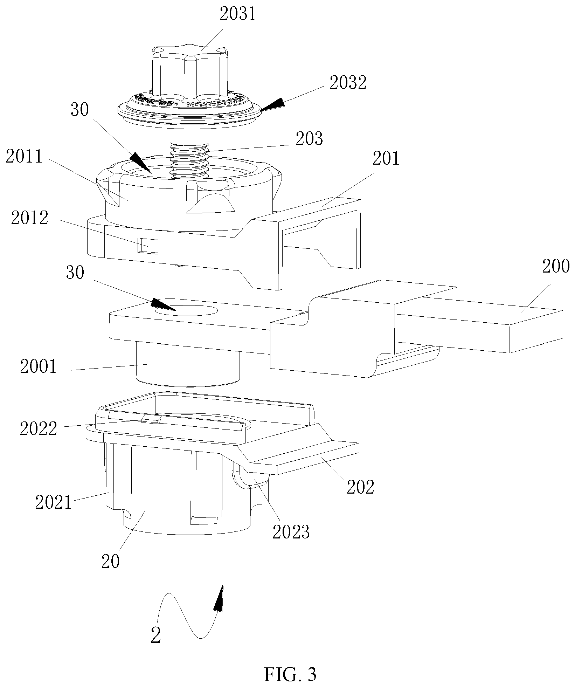

A structure of the output electrode inserter 2 according to an embodiment is illustrated in FIG. 1 and FIG. 3. The output electrode inserter 2 includes the housing that is insulated, the inserter busbar 200, and the inserter insertion portion. The inserter busbar 200 is located within the housing, and has one end extending out of the housing and the other end located at the inserter insertion portion. The inserter insertion portion is formed on the housing. A fastener is disposed at the inserter insertion portion. The inserter insertion portion is inserted into and connected to the base insertion portion to form an electrical connection between the inserter busbar 200 and the base busbar 100. The output electrode inserter 2 is fixedly connected to the output electrode base 1 by connecting the fastener to the fastening fitting member.

Here, the inserter insertion portion is a plug 20 formed on the housing. A through hole 30 penetrating the plug 20 and the housing is defined on the housing for facilitating mounting of the fastener. As illustrated in FIG. 1 and FIG. 2, the housing includes an upper housing 201, and a lower housing 202 engaged with the upper housing 201. The lower housing 202 has the plug 20. The inserter busbar 200 is received between the upper housing 201 and the lower housing 202. The through hole 30 penetrates the upper housing 201 and the lower housing 202. In this way, the fastener can pass through the through hole 30 to be connected to the fastening fitting member.

In addition, an end, out of which the inserter busbar 200 extends, of the housing has a flared opening defined by the upper housing 201 and the lower housing 202. In this way, a middle portion of the Z-shaped inserter busbar 200 wrapped by an insulation coat can be assembled into the flared opening of the housing to ensure IPXXB-level protection at an adapter portion and avoid an exposure or interference due to process-inherent fit tolerance.

In order to facilitate a connection between the upper housing 201 and the lower housing 202, in an embodiment, a snap block 2022 is disposed on one of the upper housing 201 and the lower housing 202, and a snap hole 2012 into which the snap block 2022 is snapped is defined on the other of the upper housing 201 and the lower housing 202. The snap hole 2012 corresponds to the snap block 2022. As illustrated in FIG. 3, the snap block 2022 may be formed on the lower housing 202, and the snap hole 2012 may be defined on the upper housing 201. The inserter busbar 200 can be fixedly received between the upper housing 201 and the lower housing 202 by means of a snapping connection between the snap block 2022 and the snap hole 2012.

As one of preferable implementations of the embodiment, the insertion hole 10 in the embodiment has a circular cross section matching with that of the plug 20. Such a structure is simple and easy to be processed and manufactured. In addition, by inserting the plug 20 into the insertion hole 10, the module output electrode structure can be designed as a compact structure that facilitates mounting.

To prevent a rotation of the plug 20 in the insertion hole 10, in an embodiment, a positioning portion is disposed between the plug 20 and the insertion hole 10 to restrict a relative rotation therebetween. As illustrated in FIG. 1 to FIG. 3, the positioning portion specifically includes a plurality of positioning blocks 2021 formed on the plug 20 and arranged circumferentially around the plug 20. A plurality of positioning grooves 107 corresponding to the plurality of positioning blocks 2021 is defined on the base insertion body. In this manner, by inserting the plurality of positioning blocks 2021 into the plurality of positioning grooves 107, respectively, the output electrode inserter 2 can be positioned on the output electrode base 1 with satisfying positioning effect.

In addition, in order to further improve performance of the connection between the output electrode inserter 2 and the output electrode base 1, snap portions are disposed between the housing and the base body 101. The snap portions are snapped with each other by inserting the plug 20 into the insertion hole 10. As illustrated in FIG. 2 and FIG. 3, a snap protrusion 106 is formed on the base body 101. A snap hole 2023 for snapping with the snap protrusion 106 is defined on the plug 20 formed on the housing. The snap hole 2023 corresponds to the snap protrusion 106. In addition, by inserting the plug 20 into the insertion hole 10, the plurality of positioning blocks 2021 is positioned to and inserted into the plurality of positioning grooves 107 in a one-to-one correspondence, and correspondingly the snap protrusion 106 is snapped into the snap hole 2023, to prevent the output electrode inserter 2 from being separated from the output electrode base 1. Therefore, it is possible to further improve the performance of the connection between the output electrode inserter 2 and the output electrode base 1.

It should be noted that no limitation is made to arrangement positions and numbers of the positioning blocks 2021 and the positioning grooves 107, as long as the positioning blocks 2021 can be inserted into the positioning grooves 107 to prevent the plug 20 from rotating relative to the insertion hole 10. Also, no limitation is made to arrangement positions and numbers of the snap protrusion 106 and the snap hole 2023, as long as the output electrode inserter 2 can be prevented from being separated from the output electrode base 1.

In addition, in an embodiment, the fastener may specifically be a bolt 203 located in the through hole 30 and perpetrating the inserter busbar 200. More solid and reliable electrical connection between the inserter busbar 200 and the base busbar 100 can be achieved through a connection between the bolt 203 and the nut 102.

To facilitate better electrical connection to the electrical connection sleeve 104 on the base busbar 100, in an embodiment, an electrical connection ring 2001 arranged around the bolt 203 is fixedly connected to the inserter busbar 200. The electrical connection ring 2001 can be sleeved over the electrical connection sleeve 104 as the bolt 203 is connected to the nut 102. In this way, it is possible to make the electrical connection between the base busbar 100 and the inserter busbar 200 more reliable.

To improve protection performance and prevent human hands from directly touching a conductive body, in the embodiment, in addition to the insulation sleeve 103 fixedly connected to the top end of the nut 102, an insulation cover 2031 is fixedly connected to a head of the bolt 203 to further improve the protection level. Also, a circular limiting platform 2032 is formed on the insulation cover 2031 to restrict the bolt 203 from being unscrewed out of the through hole 30. In addition, a containment ring 2011 arranged around the through hole 30 is disposed on a top of the upper housing 201. The circular limiting platform 2032 is mounted and disposed within the containment ring 2011.

In an embodiment, the inserter busbar 200 and the bolt 203 can be shielded by providing the circular limiting platform 2032 and the containment ring 2011. Thus, it is possible to prevent the inserter busbar 200 and an unscrewed portion of the bolt 203 from being exposed, thereby further improve the protection level.

With the module output electrode structure according to the embodiment, by fixing the base busbar 100 on the base body 101 by means of the injection molding and by embedding the inserter busbar 200 into the housing, the module output electrode structure can have a small contour size, which saves the mounting space, thereby facilitating mounting in a small space, and realizing the IPXXB-level protection. In addition, such a structure not only allows satisfying electrical connection performance between the inserter busbar 200 and the base busbar 100, but also allows the output electrode inserter 2 to be reliably connected to the output electrode base 1, thereby improving use safety of the module output electrode structure. In addition, offsetting the adapter end 50 from the base insertion portion can further reduce the size of the module output electrode structure, thereby improving safety in the event of the high-voltage crush, and realizing a better use effect.

## Claims

1. A module output electrode structure, comprising:
an output electrode base (1); and
an output electrode inserter (2) fixedly connected to the output electrode base (1), wherein:
a base busbar (100) is provided in the output electrode base (1);
an inserter busbar (200) in an electrical connection with the base busbar (100) is provided in the output electrode inserter (2);
one end of the base busbar (100) is formed as an adapter end (50) protruding from the output electrode base (1);
one end of the inserter busbar (200) extends out of the output electrode inserter (2);
the adapter end (50) and the output electrode inserter (2) are offset at two sides of the output electrode base (1), respectively;
the output electrode base (1) comprises a base body (101) that is insulated, and a base insertion portion formed on the base body (101);
the base busbar (100) is located in the base body (101);
the adapter end (50) protrudes from the base body (101);
another end of the base busbar (100) is located at the base insertion portion;
the adapter end (50) and the base insertion portion are offset at the two sides of the base body (101), respectively;
a fastening fitting member is provided at the base insertion portion;
the output electrode inserter (2) comprises a housing that is insulated, and an inserter insertion portion formed on the housing;
the inserter busbar (200) is located in the housing, and has one end extending out of the housing and another end located at the inserter insertion portion;
a fastener is provided at the inserter insertion portion;
the inserter insertion portion is inserted in and connected to the base insertion portion to form an electrical connection between the inserter busbar (200) and the base busbar (100);
the output electrode inserter (2) is fixedly connected to the output electrode base (1) by connecting the fastener to the fastening fitting member; and
a mounting portion is provided on the base body (101), the mounting portion being configured to enable the module output electrode structure to be mounted on a module end plate (40),
**characterized in that**:
a mounting groove is defined on the module end plate (40), the base body (101) being mounted in the mounting groove;
the mounting portion comprises a snap feature formed on the base body (101);
a snap fitting feature corresponding to the snap feature is provided on the module end plate (40);
a protective protrusion (109) corresponding to the snap fitting structure is provided on a bottom of the base body (101); and
an avoidance groove (402) configured to avoid the protective protrusion (109) is defined at a bottom of the mounting groove.

2. The module output electrode structure according to claim 1, wherein:
the base insertion portion is an insertion hole (10) defined on the base body (101);
the inserter insertion portion is a plug (20) formed on the housing; and
a through hole (30) penetrating the housing and the plug (20) is defined on the housing.

3. The module output electrode structure according to claim 2, wherein:
a positioning portion is provided between the plug (20) and the insertion hole (10), the positioning portion being configured to restrict a relative rotation between the plug (20) and the insertion hole (10); and
snap portions are provided between the housing and the base body (101), the snap portions being snapped with and connected to each other by inserting the plug (20) into the insertion hole (10).

4. The module output electrode structure according to claim 2 or 3, wherein:
the fastening fitting member is a nut (102) fixedly connected to the base busbar (100) and fixed in the insertion hole (10);
the fastener is a bolt (203) located in the through hole (30) and penetrating the inserter busbar (200); and
the electrical connection between the inserter busbar (200) and the base busbar (100) is formed through a connection between the bolt (203) and the nut (102).

5. The module output electrode structure according to claim 4, wherein:
an electrical connection sleeve (104) fixedly connected to the base busbar (100) is sleeved over the nut (102);
an electrical connection ring (2001) arranged around the bolt (203) is fixedly connected to the inserter busbar (200); and
the electrical connection ring (2001) is sleeved over the electrical connection sleeve (104) as the bolt (203) is connected to the nut (102).

6. The module output electrode structure according to claim 4 or 5, wherein:
an insulation sleeve (103) is fixedly connected to a top end of the nut (102);
an insulation cover (2031) is fixedly connected to a head of the bolt (203); and
a circular limiting platform (2032) is formed on the insulation cover (2031) and configured to restrict the bolt (203) from being unscrewed out of the through hole (30).

7. The module output electrode structure according to any one of claims 2 to 6, wherein:
the housing comprises an upper housing (201), and a lower housing (202) snapped with the upper housing (201) and having the inserter;
the inserter busbar (200) is received between the upper housing (201) and the lower housing (202);
the through hole (30) penetrates the upper housing (201) and the lower housing (202);
a containment ring (2011) arranged around the through hole (30) is provided on a top of the upper housing (201); and
an end, out of which the inserter busbar (200) extends, of the housing is formed into a flared opening defined by the upper housing (201) and the lower housing (202).

8. The module output electrode structure according to any one of claims 1 to 7, wherein:
the base busbar (100) has a transverse portion, and a vertical portion located at one end of the transverse portion and arranged on a side of the transverse portion;
a notch (105) is defined on the side of the transverse portion adj acent to the vertical portion; and
the base has a same shape as the base busbar (100).

## Patentansprüche

1. Ausgangselektrodenstruktur für ein Modul, umfassend:
eine Ausgangselektrodenbasis (1); und
einen Ausgangselektrodeneinsetzer (2), der fest mit der Ausgangselektrodenbasis (1) verbunden ist, wobei:
eine Basissammelschiene (100) in der Ausgangselektrodenbasis (1) bereitgestellt ist;
eine Einsetzersammelschiene (200) in einer elektrischen Verbindung mit der Basissammelschiene (100) in dem Ausgangselektrodeneinsetzer (2) bereitgestellt ist;
ein Ende der Basissammelschiene (100) als ein Adapterende (50) ausgebildet ist, das von der Ausgangselektrodenbasis (1) vorsteht;
sich ein Ende der Einsetzersammelschiene (200) aus dem Ausgangselektrodeneinsetzer (2) heraus erstreckt;
das Adapterende (50) und der Ausgangselektrodeneinsetzer (2) jeweils an zwei Seiten der Ausgangselektrodenbasis (1) versetzt sind;
die Ausgangselektrodenbasis (1) einen Basiskörper (101), der isoliert ist, und einen Basiseinführungsabschnitt, der an dem Basiskörper (101) ausgebildet ist, umfasst;
sich die Basissammelschiene (100) in dem Basiskörper (101) befindet;
das Adapterende (50) von dem Basiskörper (101) vorsteht;
sich ein anderes Ende der Basissammelschiene (100) an dem Basiseinführungsabschnitt befindet;
das Adapterende (50) und der Basiseinführungsabschnitt jeweils an den zwei Seiten des Basiskörpers (101) versetzt sind;
ein Befestigungsgegenstück an dem Basiseinführungsabschnitt bereitgestellt ist;
der Ausgangselektrodeneinsetzer (2) ein Gehäuse, das isoliert ist, und einen Einsetzereinführungsabschnitt, der an dem Gehäuse ausgebildet ist, umfasst;
sich die Einsetzersammelschiene (200) in dem Gehäuse befindet und ein Ende, das sich aus dem Gehäuse heraus erstreckt, und ein anderes Ende, das sich an dem Einsetzereinführungsabschnitt befindet, aufweist;
ein Befestigungselement an dem Einsetzereinführungsabschnitt bereitgestellt ist;
der Einsetzereinführungsabschnitt in den Basiseinführungsabschnitt eingeführt und mit diesem verbunden ist, um eine elektrische Verbindung zwischen der Einsetzersammelschiene (200) und der Basissammelschiene (100) zu bilden;
der Ausgangselektrodeneinsetzer (2) fest mit der Ausgangselektrodenbasis (1) verbunden ist, indem das Befestigungselement mit dem Befestigungsgegenstück verbunden wird; und
ein Montageabschnitt an dem Basiskörper (101) bereitgestellt ist, wobei der Montageabschnitt dazu konfiguriert ist, zu ermöglichen, dass die Ausgangselektrodenstruktur für ein Modul an einer Modulendplatte (40) montiert werden kann,
**dadurch gekennzeichnet, dass**:
eine Montagenut an der Modulendplatte (40) definiert ist, wobei der Basiskörper (101) in der Montagenut montiert ist;
der Montageabschnitt ein Schnappmerkmal umfasst, das an dem Basiskörper (101) ausgebildet ist;
ein Schnappverschlussmerkmal, das dem Schnappmerkmal entspricht, an der Modulendplatte (40) bereitgestellt ist;
ein Schutzvorsprung (109), der der Schnappverschlussstruktur entspricht, an einem Boden des Basiskörpers (101) bereitgestellt ist; und
eine Aussparungsnut (402), die dazu konfiguriert ist, Freiraum für den Schutzvorsprung (109) bereitzustellen, an einem Boden der Montagenut definiert ist.

2. Ausgangselektrodenstruktur für ein Modul nach Anspruch 1, wobei:
der Basiseinführungsabschnitt ein Einführungsloch (10) ist, das an dem Basiskörper (101) definiert ist;
der Einsetzereinführungsabschnitt ein Stecker (20) ist, der an dem Gehäuse ausgebildet ist; und
ein Durchgangsloch (30), das das Gehäuse und den Stecker (20) durchdringt, an dem Gehäuse definiert ist.

3. Ausgangselektrodenstruktur für ein Modul nach Anspruch 2, wobei:
ein Positionierungsabschnitt zwischen dem Stecker (20) und dem Einführungsloch (10) bereitgestellt ist, wobei der Positionierungsabschnitt dazu konfiguriert ist, eine relative Drehung zwischen dem Stecker (20) und dem Einführungsloch (10) einzuschränken; und
Schnappabschnitte zwischen dem Gehäuse und dem Basiskörper (101) bereitgestellt sind, wobei die Schnappabschnitte miteinander verrastet und miteinander verbunden sind, indem der Stecker (20) in das Einführungsloch (10) eingeführt wird.

4. Ausgangselektrodenstruktur für ein Modul nach Anspruch 2 oder 3, wobei:
das Befestigungsgegenstück eine Mutter (102) ist, die fest mit der Basissammelschiene (100) verbunden ist und in dem Einführungsloch (10) fixiert ist;
das Befestigungselement ein Bolzen (203) ist, der sich in dem Durchgangsloch (30) befindet und die Einsetzersammelschiene (200) durchdringt; und
die elektrische Verbindung zwischen der Einsetzersammelschiene (200) und der Basissammelschiene (100) durch eine Verbindung zwischen dem Bolzen (203) und der Mutter (102) gebildet ist.

5. Ausgangselektrodenstruktur für ein Modul nach Anspruch 4, wobei:
eine elektrische Verbindungshülse (104), die fest mit der Basissammelschiene (100) verbunden ist, über die Mutter (102) gestülpt ist;
ein elektrischer Verbindungsring (2001), der um den Bolzen (203) herum angeordnet ist, fest mit der Einsetzersammelschiene (200) verbunden ist; und
der elektrische Verbindungsring (2001) über die elektrische Verbindungshülse (104) gestülpt wird, wenn der Bolzen (203) mit der Mutter (102) verbunden wird.

6. Ausgangselektrodenstruktur für ein Modul nach Anspruch 4 oder 5, wobei:
eine Isolationshülse (103) fest mit einem oberen Ende der Mutter (102) verbunden ist;
eine Isolationsabdeckung (2031) fest mit einem Kopf des Bolzens (203) verbunden ist; und
eine kreisförmige Begrenzungsplattform (2032) an der Isolationsabdeckung (2031) ausgebildet ist und dazu konfiguriert ist, ein Herausschrauben des Bolzens (203) aus dem Durchgangsloch (30) einzuschränken.

7. Ausgangselektrodenstruktur für ein Modul nach einem der Ansprüche 2 bis 6, wobei:
das Gehäuse ein oberes Gehäuse (201) und ein unteres Gehäuse (202) umfasst, das mit dem oberen Gehäuse (201) verrastet ist und den Einsetzer aufweist;
die Einsetzersammelschiene (200) zwischen dem oberen Gehäuse (201) und dem unteren Gehäuse (202) aufgenommen ist;
das Durchgangsloch (30) das obere Gehäuse (201) und das untere Gehäuse (202) durchdringt;
ein Sicherheitsring (2011), der um das Durchgangsloch (30) herum angeordnet ist, an einer Oberseite des oberen Gehäuses (201) bereitgestellt ist; und
ein Ende, aus dem sich die Einsetzersammelschiene (200) heraus erstreckt, des Gehäuses zu einer sich erweiternden Öffnung ausgebildet ist, die durch das obere Gehäuse (201) und das untere Gehäuse (202) definiert ist.

8. Ausgangselektrodenstruktur für ein Modul nach einem der Ansprüche 1 bis 7, wobei:
die Basissammelschiene (100) einen Querabschnitt und einen vertikalen Abschnitt aufweist, der sich an einem Ende des Querabschnitts befindet und auf einer Seite des Querabschnitts angeordnet ist;
eine Kerbe (105) auf der Seite des Querabschnitts angrenzend an den vertikalen Abschnitt definiert ist; und
die Basis dieselbe Form wie die Basissammelschiene (100) aufweist.

## Revendications

1. Structure d'électrode de sortie de module, comprenant :
une base d'électrode de sortie (1) ; et
un dispositif d'insertion d'électrode de sortie (2) connecté de manière fixe à la base d'électrode de sortie (1), dans laquelle :
une barre omnibus de base (100) est prévue dans la base d'électrode de sortie (1) ;
une barre omnibus de dispositif d'insertion (200) en connexion électrique avec la barre omnibus de base (100) est prévue dans le dispositif d'insertion d'électrode de sortie (2) ;
une extrémité de la barre omnibus de base (100) est formée comme une extrémité d'adaptateur (50) faisant saillie depuis la base d'électrode de sortie (1) ;
une extrémité de la barre omnibus de dispositif d'insertion (200) s'étend hors du dispositif d'insertion d'électrode de sortie (2) ;
l'extrémité d'adaptateur (50) et le dispositif d'insertion d'électrode de sortie (2) sont décalés au niveau des deux côtés de la base d'électrode de sortie (1), respectivement ;
la base d'électrode de sortie (1) comprend un corps de base (101) qui est isolé, et une partie d'insertion de base formée sur le corps de base (101) ;
la barre omnibus de base (100) est située dans le corps de base (101) ;
l'extrémité d'adaptateur (50) fait saillie depuis le corps de base (101) ;
une autre extrémité de la barre omnibus de base (100) est située au niveau de la partie d'insertion de base ;
l'extrémité d'adaptateur (50) et la partie d'insertion de base sont décalées au niveau des deux côtés du corps de base (101), respectivement ;
un élément de raccord de fixation est prévu au niveau de la partie d'insertion de base ;
le dispositif d'insertion d'électrode de sortie (2) comprend un boîtier qui est isolé, et une partie d'insertion de dispositif d'insertion formée sur le boîtier ;
la barre omnibus de dispositif d'insertion (200) est située dans le boîtier, et a une extrémité s'étendant hors du boîtier et une autre extrémité située au niveau de la partie d'insertion de dispositif d'insertion ;
un élément de fixation est prévu au niveau de la partie d'insertion de dispositif d'insertion ;
la partie d'insertion de dispositif d'insertion est insérée dans et connectée à la partie d'insertion de base pour former une connexion électrique entre la barre omnibus de dispositif d'insertion (200) et la barre omnibus de base (100) ;
le dispositif d'insertion d'électrode de sortie (2) est connecté de manière fixe à la base d'électrode de sortie (1) en connectant l'élément de fixation à l'élément de raccord de fixation ; et
une partie de montage est prévue sur le corps de base (101), la partie de montage étant configurée pour permettre à la structure d'électrode de sortie de module d'être montée sur une plaque d'extrémité de module (40),
**caractérisée en ce que** :
une rainure de montage est définie sur la plaque d'extrémité de module (40), le corps de base (101) étant monté dans la rainure de montage ;
la partie de montage comprend une caractéristique d'encliquetage formée sur le corps de base (101) ;
une caractéristique d'ajustement par encliquetage correspondant à la caractéristique d'encliquetage est prévue sur la plaque d'extrémité de module (40) ;
une saillie de protection (109) correspondant à la structure d'ajustement par encliquetage est prévue sur un fond du corps de base (101) ; et
une rainure d'évitement (402) conçue pour éviter la saillie de protection (109) est définie au niveau d'un fond de la rainure de montage.

2. Structure d'électrode de sortie de module selon la revendication 1, dans laquelle :
la partie d'insertion de base est un trou d'insertion (10) défini sur le corps de base (101) ;
la partie d'insertion de dispositif d'insertion est un bouchon (20) formé sur le boîtier ; et
un trou traversant (30) pénétrant dans le boîtier et le bouchon (20) est défini sur le boîtier.

3. Structure d'électrode de sortie de module selon la revendication 2, dans laquelle :
une partie de positionnement est prévue entre le bouchon (20) et le trou d'insertion (10), la partie de positionnement étant configurée pour limiter une rotation relative entre le bouchon (20) et le trou d'insertion (10) ; et
des parties d'encliquetage sont prévues entre le boîtier et le corps de base (101), les parties d'encliquetage étant encliquetées et connectées les unes aux autres en insérant le bouchon (20) dans le trou d'insertion (10).

4. Structure d'électrode de sortie de module selon la revendication 2 ou 3, dans laquelle :
l'élément de raccord de fixation est un écrou (102) connecté de manière fixe à la barre omnibus de base (100) et fixé dans le trou d'insertion (10) ;
l'élément de fixation est un boulon (203) situé dans le trou traversant (30) et pénétrant dans la barre omnibus de dispositif d'insertion (200) ; et
la connexion électrique entre la barre omnibus d'insertion (200) et la barre omnibus de base (100) est formée par une connexion entre le boulon (203) et l'écrou (102).

5. Structure d'électrode de sortie de module selon la revendication 4, dans laquelle :
un manchon de connexion électrique (104) connecté de manière fixe à la barre omnibus de base (100) est emmanché sur l'écrou (102) ;
une bague de connexion électrique (2001) disposée autour du boulon (203) est connectée de manière fixe à la barre omnibus de dispositif d'insertion (200) ; et
la bague de connexion électrique (2001) est emmanchée sur le manchon de connexion électrique (104) au fur et à mesure de la connexion du boulon (203) à l'écrou (102).

6. Structure d'électrode de sortie de module selon la revendication 4 ou 5, dans laquelle :
un manchon d'isolation (103) est connecté de manière fixe à une extrémité supérieure de l'écrou (102) ;
un cache d'isolation (2031) est connecté de manière fixe à une tête du boulon (203) ; et
une plateforme de limitation circulaire (2032) est formée sur le cache d'isolation (2031) et configurée pour empêcher le boulon (203) d'être dévissé et de sortir du trou traversant (30).

7. Structure d'électrode de sortie de module selon l'une quelconque des revendications 2 à 6, dans laquelle :
le boîtier comprend un boîtier supérieur (201), et un boîtier inférieur (202) encliqueté avec le boîtier supérieur (201) et ayant le dispositif d'insertion ;
la barre omnibus de dispositif d'insertion (200) est reçue entre le boîtier supérieur (201) et le boîtier inférieur (202) ;
le trou traversant (30) pénètre dans le boîtier supérieur (201) et le boîtier inférieur (202) ;
un anneau de confinement (2011) agencé autour du trou traversant (30) est prévu sur le haut du boîtier supérieur (201) ; et
une extrémité, à partir de laquelle la barre omnibus de dispositif d'insertion (200) s'étend, du boîtier est formée dans une ouverture évasée définie par le boîtier supérieur (201) et le boîtier inférieur (202).

8. Structure d'électrode de sortie de module selon l'une quelconque des revendications 1 à 7, dans laquelle :
la barre omnibus de base (100) a une partie transversale, et une partie verticale située à une extrémité de la partie transversale et agencée sur un côté de la partie transversale ;
une encoche (105) est définie sur le côté de la partie transversale adjacente à la partie verticale ; et
la base a la même forme que la barre omnibus de base (100).
